# EUROPEAN PATENT APPLICATION

(11) **EP 4 074 597 A1**
(43) Date of publication of application: **19.10.2022**
(21) Application number: 21168503.7
(22) Date of filing: 15.04.2021
(51) Int. Cl.: B64C 39/02, G01S 5/02, G05D 1/10, G08G 5/00, H04K 3/00

(54) **AERIAL VEHICLE AND METHOD FOR CONTROLLING AN AERIAL VEHICLE**

(71) Applicant: Rohde & Schwarz GmbH & Co. KG, 81671 München (DE)
(72) Inventor: DURST, Alexander, 85221 Dachau (DE)
(74) Representative: Isarpatent

(57) **Abstract**

An aerial vehicle is provided which serves as flying platform for reacting on wireless signals. The aerial vehicle measures a power level of a wireless signal related to a wireless communication link and autonomously navigates the aerial vehicle to an appropriate position based on the measurement result of the wireless signal.

## Description

### TECHNICAL FIELD

The present invention relates to an aerial vehicle, in particular an aerial vehicle for reacting on wireless signals. The present invention further relates to a method for controlling an aerial vehicle.

### BACKGROUND

Even though applicable in general to any kind of vehicle, in particular any kind of vehicle that can navigate autonomously at least in part, the present invention and its underlying problem will be hereinafter described in connection with an unmanned aerial vehicle such as a drone.

Wireless communication links, especially directional radio links between two end points are becoming more and more important. In order to evaluate the quality of wireless communication links or to identify transmission problems, it is desirable to perform measurements under real operational conditions. For this purpose, a measurement device may be arranged in a spatial area between the communication partners.

However, depending on the topographical conditions or other environmental constraints, it might be difficult or even impossible to arrange a ground-based measurement device on an appropriate measurement position. Thus, alternative solutions for perform measurements on a radio link are required.

Against this background, there is a need for an airborne measurement arrangement for measuring wireless signals in the space between the communication partners of the wireless link. In particular, it is desirable to automatically navigate such an airborne measurement device to an appropriate measurement position.

### SUMMARY

The present invention provides an aerial vehicle and a method for controlling an aerial vehicle with the features of the independent claims. Further advantageous embodiments are subject matter of the dependent claims.

Accordingly, an aerial vehicle for reacting on wireless signals is provided. The aerial vehicle comprises a power measurement device and a controller. The power measurement device is configured to receive a wireless signal. The power measurement device is further configured to measure a power value of the received wireless signal. The controller is communicatively coupled with the power measurement device. The controller is configured to control a movement of the aerial vehicle based on the measured power value of the received wireless signal.

Further, a method for controlling an aerial vehicle is provided. The method comprises a step of receiving a wireless signal. In particular, the wireless signal is received by a power measurement device of the aerial vehicle. The method further comprises a step of measuring a power value of the received wireless signal. Further, the method comprises a step of controlling a movement of the aerial vehicle based on the measured power value of the received wireless signal.

The present invention is based on the finding that measuring wireless signals of a communication link between multiple communication partners requires an appropriate positioning of the measurement device. In particular, when using a flying object such as an aerial vehicle for carrying the measurement device, it is difficult to identify an appropriate spatial position for measuring the signals of the wireless communication and precisely move the flying object to the appropriate position.

The present invention therefore aims to provide a flying object which can serve as a platform for carrying a measurement device, wherein the flying object can automatically identify an appropriate position for measuring wireless signals and which can automatically navigate to the desired position. It is for this purpose that the flying object comprises a device for measuring and analysing the properties of wireless signals, especially wireless signals related to a specific communication link, and using the measured signals of the communication link in order to determine an appropriate position for measuring, evaluating or interfering the signals of the wireless communication link.

The flying object which may serve as a platform for carrying the measurement and/or interfering devices may be any kind of appropriate aerial vehicle. In particular, the flying object may be any kind of aerial vehicle which can move/navigate autonomously at least in part. Accordingly, the autonomous movement of the aerial vehicle may be performed based on signals received at the aerial vehicle. For example, the aerial vehicle may move autonomously to a spatial position where the signal of a wireless communication link is received with an appropriate, especially optimum, signal strength.

Even though, the description mainly refers to wireless signals in form of radio frequency signals, it is understood that the general approach may be also applied to any other kind of wireless signals, for example optical signals.

In order to evaluate the signal strength or any other kind of appropriate parameter which can serve as a basis for navigating the aerial vehicle, the aerial vehicle may comprise an appropriate measurement device. For example, the aerial vehicle may comprise a power measurement device which receives a wireless signal and determines an appropriate value, for example power value or the like related to the received signal. For this purpose, the respective measurement device, for example a power measurement device, may comprise a receiving element, for example an antenna. The antenna may receive a radio frequency signal, in particular a radio frequency signal of a specific communication link. For example, the antenna may be an antenna with an omnidirectional or at least omnidirectional antenna beam. Accordingly, radio frequency signals may be received irrespective of the orientation of the aerial vehicle. Alternatively, the antenna may have a predetermined antenna beam, especially an antenna beam for preferably receiving wireless signals from a specific direction or with a specific opening angle. In this way, it is possible to determine a specific direction from which the signals are received. Accordingly, this direction may be further taken into account when analysing the signal and navigating the aerial vehicle accordingly.

The received wireless signals may be analysed, for example, in order to determine a signal strength or power value of the received wireless signal. Especially, the analysis of the signal strength or the power value may be performed with respect to a specific wireless signal related to a desired communication link. For this purpose, the respective measurement device may comprise further elements such as filters, especially frequency filters, amplifiers, attenuators or other appropriate elements in order to limit the further analysis to a specific signal or signal components related to the signal of a desired communication link. However, it is understood, that any other measures may be taken in order to identify a specific signal and/or limit the signal analysis to a specific signal related to a desired communication link.

The navigation/movement of the aerial vehicle is controlled based on the parameters/values which are determined from the received signal related to the wireless communication link. In particular, the aerial vehicle may be controlled such that the aerial vehicle moves to a position having specific properties with respect to the measured wireless signal. For example, the aerial vehicle may be navigated to a position having an optimum/maximum signal strength of the related wireless communication link. For this purpose, a controller may receive the parameters or values which are determined for the received wireless signal. The controller may compute a direction of movement or a position for the aerial vehicle. Further, the controller may generate appropriate commands for autonomously navigating the aerial vehicle to the desired position or in the desired direction. It is understood, that the respective commands for navigating the aerial vehicle may depend on the individual configuration of the aerial vehicle and the respective components for navigating/moving the aerial vehicle.

For example, the controller may take into account data related to an antenna beam of an antenna which is used for receiving the wireless signal. Furthermore, the controller may take into account a variation such as an increasing or decreasing of a power value of the received wireless signal when the aerial vehicle is moving around. For example, the controller may control the aerial vehicle to move along a predetermined path and analyse the variation of the power value of the received wireless signal or any other appropriate parameter. For example, the controller may control the movement of the aerial vehicle along a circular path and analyse the variation of the measured power while the aerial vehicle is moving along the predetermined path. Subsequently, the controller may determine a position having the maximum power value or direction of movement for increasing the power value of the received signal. However, it is understood, that any other scheme for analysing the power value or another appropriate parameter in the three-dimensional space or along a two-dimensional plane and identifying an optimum position or direction may be possible, too. Furthermore, it may be also possible to determine an appropriate orientation of the aerial vehicle, especially receiving elements mounted on the aerial vehicle, and turn the arial vehicle accordingly to improve the receiving and/or emitting properties accordingly.

The controller may comprise a memory for storing measured values. For example, the controller may store power values of the received wireless signals in combination with two-dimensional or three-dimensional coordinates. In this way, the controller may generate a map of power values or any other appropriate parameters. Accordingly, the controller may refer to these stored data and identify an appropriate, in particular an optimum position. Accordingly, the controller may generate appropriate commands for autonomously navigating the aerial vehicle to the determined optimum position.

It may be further possible to store the measures power values or other characterizing parameters together with two or three-dimensional coordinates. For example, the aerial vehicle may further comprise a device for determining the related coordinates. For this purpose, a global navigation satellite system (GNSS) such as GPS or Galileo may be used. However, any other approach for determining the two- or three-dimensional position of the aerial vehicle may be possible, too.

Accordingly, various established optimization algorithms may be used in order to determine a local or global position of optimum reception, a special position of highest signal strength of a spatial position for an optimum interception. The processing of the respective algorithm and/or the computation of the optimum position may be performed locally, for example by a processing unit of the controller in the aerial vehicle. However, it may be also possible to perform the processing/computation by a remote device, for example in a cloud or the like. For this purpose, a communication link may be established between the aerial vehicle and the remote device.

Furthermore, it may be possible to specify restricted areas which may be not entered by the aerial vehicle. For example, two- or three-dimensional areas may be defined in advance. Especially, it may be possible to specify a minimum and/or maximum height for the aerial vehicle. In particular, different constraints for the height may be specified depending on the topographical properties on ground or any other requirements.

It may be also possible to specify a specific two- or three-dimensional area in which the aerial vehicle is allowed to operate. Accordingly, the aerial vehicle may fly autonomously to the specified area and search for an appropriate position within the specified area.

The controller may comprise, for example, a general-purpose processor with corresponding instructions. Further, the controller may comprise interfacing elements for receiving signals, in particular signals from the power measurement device and/or for providing signals to further components, in particular to components for navigating the aerial vehicle. The controller may be controlled by instructions that cause the controller to perform desired operations. For this purpose, the controller may comprise a processing unit that is coupled to a memory, for example via a memory bus. The memory may store instructions that cause the controller to perform the desired operations.

Further embodiments of the present invention are subject of the further sub claims and of the following description, referring to the drawings.

In a possible embodiment, the aerial vehicle comprises an unmanned aerial vehicle (UAV). Accordingly, the UAV may be a flying platform for carrying measurement instruments without any operator on board. The UAV may be an aerial vehicle which can move around and navigate autonomously, at least in part. For example, the UAV may be a flying object which can be remotely controlled by a user or a remote processing device. In this way, the aerial vehicle may be navigated to a desired area. After arriving at the desired area, the aerial vehicle may autonomously navigate and move around in order to move to an optimum position for measuring or interfering a communication link. Alternatively, the UAV may navigate to a desired area and an optimum position with respect to a communication link completely autonomously.

In a possible embodiment, the aerial vehicle comprises a highly movable flying platform such as a small-sized drone or the like. For example, the aerial vehicle may comprise a flying platform such as a quadcopter or octocopter which can move around in a three-dimensional space. Such highly movable flying platforms provide an appropriate platform for carrying measuring or interfering devices to an optimum three-dimensional position with respect to a specific wireless communication link.

In a possible embodiment, the power measurement device is configured to receive a signal of a wireless point to point communication link. For example, a point-to-point communication link may be a communication between two specific communication partners. For example, each communication partner may have a fixed position, such as an antenna at a fixed predetermined position. However, it may be also possible that at least one or even both communication partners may move around. For example, one of the communication partners may be located in a ground-based vehicle, a ship or an air born flying object such as a plane or a helicopter. When at least one of the communication partners is moving around, the aerial vehicle according to the present invention may dynamically adapt its position in order to continuously optimize its position with respect to the communication link.

In a possible embodiment, the power measurement device is configured to receive a signal of a directional wireless link. Such a directional wireless link may be established, for example, between two fixed stations. Directional communication links usually transmit wireless signals with a very narrow beam width. Accordingly, it is very important to move the measuring device very precisely to an appropriate position in order to measure or interfere the wireless signals of such directional communication links.

In a possible embodiment, the power measurement device is configured to receive wireless signals from multiple communication partners of a wireless communication link. Accordingly, the power measurement device may individually measure a power value for each received wireless signal. In this case, the controller is configured to control the movement of the aerial vehicle based on a combination of the measured power values of the received wireless signals. Since the signal strength of a transmitted signal decreases with increasing distance to the transmitter, a maximum signal strength with respect to a signal transmitter may be obtained by navigating as close as possible to the respective transmitter. However, when considering a wireless communication between two or more communication partners, an appropriate, in particular an optimum position has to take into account the signal strengths of transmitted signals from all communication partners. For example, an optimum position may be a position somewhere between the communication partners where the signals from all communication partners have almost a same signal strength. However, any other scheme for determining an optimum position between two or more communication partners may be possible, too.

In a possible embodiment, the aerial vehicle comprises a signal analysing device. The signal analysing device is configured to perform a signal analysis of the received wireless signal. For this purpose, the signal analysing device may obtain the wireless signal received by the power measurement device. Alternatively, the analysing device may comprise a separate antenna or receiving element for receiving wireless signals. The signal analysing device may comprise any kind of appropriate elements such as amplifiers, attenuators, filters, demodulators, mixers, etc. The signal analysing device may analyse the received wireless signal in order to determine any kind of appropriate parameter with respect to the received wireless signal.

In a possible embodiment, the signal analysing device is configured to perform a signal analysis comprising at least one of demodulating the wireless signal, determining a quality parameter of the wireless signal, intercepting the wireless signal or monitoring the wireless signal. Furthermore, it is understood, that the signal analysing device may perform any other kind of operation for analysing the wireless signal. For this purpose, the signal analysing device may comprise appropriate units for demodulating the wireless signal, measuring quality parameters or perform any other kind of appropriate analysing operation.

In a possible embodiment, the signal analysing device comprises a recording unit. The recording unit is configured to record the results of the signal analysis. For example, the recording unit may comprise a memory, for example a non-volatile memory for storing the data of the result of the signal analysis. For this purpose, any kind of appropriate recording scheme may be applied. For example, the resulting data may be stored in association with a timestamp, and/or further information. For example, if a communication link between two or more communication partners is analysed, the result of the analysis may further comprise information of the respective communication partner which has transmitted the respective analysed wireless signal.

In a possible embodiment, the signal analysing device comprises a transmitter unit. The transmitter unit is configured to transmit the results of the signal analysis to a remote device. The remote device may be, for example a processing device in a cloud or the like. The remote device may receive the data from the transmitter of the analysing device and store the received data for a later analysis. Alternatively, the remote device may receive and further process the received data in real-time.

In a possible embodiment, the aerial vehicle comprises a disturbing device. The disturbing device is configured to disturb the wireless signal of the communication link. Since the aerial vehicle is automatically navigated to an appropriate optimum position with respect to the wireless communication link, a very efficient interfering of the communication link can be achieved.

In a possible embodiment, the disturbing device is configured to disturb the wireless signal by at least one of emitting a predetermined false signal, emitting an unspecific jamming signal and/or generating and emitting a specific interfering signal, wherein the specific interfering signal may be generated with respect to the wireless signal. However, it is understood, that any other appropriate approach for disturbing or interfering the wireless signal of a communication link may be possible, too. The signals for interfering the wireless communication link may be generated, for example automatically by the disturbing device. Alternatively, it may be also possible to remotely control the disturbing device, for example remotely specify a power level or degree of interference. In order to perform an appropriate disturbance of the wireless communication link, the disturbing device may comprise any kind of appropriate elements such as signal generators, amplifiers, mixers, oscillators, antennas etc.

With the present invention it is possible to navigate a flying platform such as an aerial vehicle to an optimum position in order to measure, analyse or interfere wireless signal of a communication link. Especially, the aerial vehicle is autonomously navigated to the appropriate optimum position by analysing a power level of a related wireless communication link. In this way, the flying platform with the measurement or interfering equipment may automatically and autonomously navigate to an optimum three-dimensional position with respect to the communication partners of the related communication link. Accordingly, an improved analysis of the communication link or disturbance of the communication link can be achieved even if the respective spatial area cannot be reached or monitored by an operator. Furthermore, a very precise navigation of the flying platform can be achieved.

### BRIEF DESCRIPTION OF THE DRAWINGS

For a more complete understanding of the present invention and advantages thereof, reference is now made to the following description taking in conjunction with the accompanying drawings. The invention is explained in more detail below using exemplary embodiments, which are specified in the schematic figures of the drawings, in which:
- Fig. 1:: shows a block diagram of an operational scenario with an aerial vehicle according to an embodiment;
- Fig. 2:: shows a schematic block diagram of an aerial vehicle according to an embodiment; and
- Fig. 3:: shows a flow diagram illustrating a method for controlling an aerial vehicle according to an embodiment.

In the drawings, same, functionally equivalent and identical operating elements, features and components are provided with same reference signs in each case, unless stated otherwise.

### DETAILED DESCRIPTION OF THE DRAWINGS

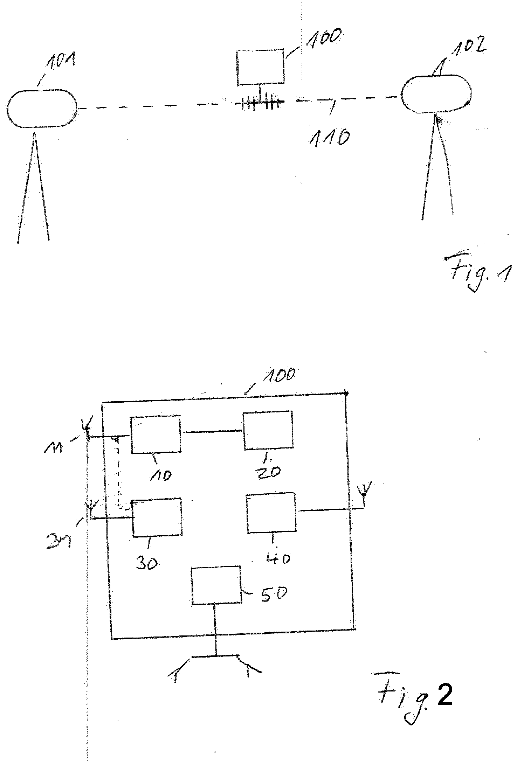

Figure 1 shows a schematic diagram illustrating an operational scenario with a flying object such as an aerial vehicle 100 according to an embodiment. A wireless communication link 110 is established between two communication partners 101 and 102. For example, this communication link 110 may be a directional radio frequency communication link between the communication partners 101 and 102. The transmitters of the communication partners 101 and 102 may emit radio frequency signals by means of an antenna configuration having a relative narrow beam width. Accordingly, it is very important that a measurement device for measuring wireless signals of this communication link is located within the antenna beams of the transmitters of both communication partners 101 and 102. Accordingly, a flying object such as the aerial vehicle 100 which may serve as a platform for carrying a measurement equipment which is used for measuring properties of the wireless communication link 110, has to be placed in an appropriate position between the communication partners 101 and 102.

It is for this purpose that the aerial vehicle 100 automatically moves to an appropriate measurement position between the communication partners 101, 102. Especially, aerial vehicle 100 may measure one or more properties of the emitted signals for the communication link 110. Based on the measured properties of the communication link 110, aerial vehicle 100 automatically controls a movement of the aerial vehicle 100 in order to navigate the aerial vehicle 100 to an appropriate, especially optimum measurement position.

Even though the above-described example relates to a directional radio frequency communication link 110 between two communication partners 101 and 102, it is understood, that any other kind of communication link may be also possible. In particular, communication link 110 may be any kind of point-to-point communication between two communication partners. Furthermore, it may be also possible to consider communication links between more than two communication partners. The aerial vehicle 100 may be also used as a platform for carrying measurement devices or other components in connection with a communication between multiple communication partners. Furthermore, it is even possible to use the aerial vehicle as a platform for carrying devices in connection with wireless signals emitted by a single transmission station.

In order to navigate the aerial vehicle 100 to an appropriate position, the aerial vehicle 100 may comprise a measurement device for receiving and evaluating wireless signals of the communication link between the communication partners 101, 102. For example, a power level or signal strength of the wireless signals is measured. Based on the results of the measured power level or signal strength, the aerial vehicle 100 determines an appropriate position or at least a direction of movement. Based on the determined position or direction of movement, the aerial vehicle 100 autonomously navigates to the determined position or along the determined direction. In this way, the aerial vehicle 100 moves towards a position at which an optimized or at least measurement of the signals of the related communication link can be performed.

Further, it is also possible to consider an angle of arrival of the wireless signals. In this case, the aerial vehicle 100 might be turned such that an orientation of the aerial vehicle 100, in particular an orientation of one or more antennas mounted on the aerial vehicle 100 is adapted accordingly, e.g., to improve a power level of a received signal.

When the aerial vehicle 100 has reached an appropriate position, an analysis of the wireless signals of the related wireless communication link may be performed. For this purpose, the aerial vehicle may further comprise appropriate measurement and/or analysis devices. In other words, the aerial vehicle 100 serves as a platform for carrying measurement devices, wherein the aerial vehicle 100 can autonomously navigate to an appropriate position for performing the desired measurements.

In the foregoing, the aerial vehicle 100 has been described as a platform for carrying measurement devices in order to measure and/or analyse wireless signals. However, it is understood, that the aerial vehicle 100 may also serve as a platform for carrying any other kinds of devices. For example, the aerial vehicle 100 may also carry devices for disturbing/interfering wireless signals. By navigating the aerial vehicle 100 to an appropriate position, a communication by a wireless communication link can be efficiently disturbed. In particular, by navigating the aerial vehicle 100 to an optimized position, the communication link can be interfered by interfering signals with a minimum power for the interfering signals.

Furthermore, it is possible that the aerial vehicle 100 carries a relay device. Such a relay device may receive wireless signals from a communication partner and forward the received signals to one or more further communication partners. Accordingly, communication between two communication partners over a wide range can be achieved. Furthermore, even a communication between communication partners in a difficult topographical environment can be achieved.

It is understood, that the aerial vehicle 100 may be also used as a platform for carrying any other kind of device which may be used in connection with analysing, interfering, amplifying, etc. of a communication link between two or more communication partners.

Figure 2 shows a schematic block diagram illustrating an exemplary embodiment of an aerial vehicle 100 according to an embodiment.

The aerial vehicle 100 comprises at least a power measurement device 10 and a controller 20. It is understood, that the aerial vehicle 100 further comprises appropriate components which are required for flying the aerial vehicle 100. Since these components such as motors, motor drivers etc. are well-known and may vary depending on the respective flying object, a further description of these standard components for flying an aerial vehicle 100 are not further discussed in this connection.

Power measurement device 10 may comprise an antenna 11 or any other kind of component for receiving wireless signals, in particular radio frequency signals. In particular, power measurement device 10 may receive wireless signals related to a communication link. For this purpose, the radio frequency signals received by antenna 11 may be provided to a power analyser of the power measurement device 10. The power analyser may determine a power value of the received wireless signal. In order to limit the analysis of the power to a specific wireless signal, further components such as filters, mixers, couplers or the like may be used. Furthermore, any other appropriate value or parameter for characterizing a signal strength, power level or the like may be determined.

The determined power value, or any other value for characterizing the wireless signal, is provided to controller 20. Controller 20 receives the determined power value and determines an optimized spatial position and/or orientation of the aerial vehicle 100.

For example, controller 20 may further comprise a receiver of global navigation satellite system (GNSS) such as GPS, Galileo or the like. In this case, controller 20 may store determined power values in association with the related spatial position at which the respective power values are measured. In this way, controller 20 may generate a two- or three-dimensional map with related power values. This map may be used for identifying an appropriate, in particular an optimized position of the aerial vehicle 100 for measuring and/or interfering the signals of the communication link 110.

In order to analyse the radio frequency conditions in the environment of the aerial vehicle 100, aerial vehicle 100 may move around along a predetermined two-dimensional or three-dimensional track. In this case, power values or other characterizing parameters may be determined by moving around on the predetermined track. For example, this predetermined track may be a circular curve, or a movement along one or more axes on a virtual coordinate system. However, it is understood, that any other appropriate track for evaluating the signal strength and/or power conditions of the related wireless communication link may be possible.

Controller 20 may evaluate the power level or other appropriate parameters in order to identify an appropriate, in particular an optimized position for the aerial vehicle 100 in the three-dimensional space. Furthermore, it is possible to limit the three-dimensional space in which the aerial vehicle 100 may move around to a predetermined area. For example, it may be possible to limit the area in which the aerial vehicle 100 may move around to an area having a maximum and/or minimum height. Additionally or alternatively, the area may be also limited to a predetermined area over ground. Furthermore, any other constraints for limiting the space in which the aerial vehicle 100 may move around may be possible, too.

The aerial vehicle 100 may be an unmanned aerial vehicle (UAV). In particular, the aerial vehicle 100 may be a highly movable flying platform such as a drone or the like. For example, the aerial vehicle 100 may be a quadcopter, octocopter or the like.

The aerial vehicle 100 may be an aerial vehicle 100 which can move around by a full autonomous control. For example, the aerial vehicle 100 may be programmed in order to autonomously navigate to a predetermined position. After autonomously reaching the predetermined position, the aerial vehicle 100 starts analysing the wireless signals of a wireless communication link and automatically navigates to an appropriate, optimized position for measuring, interfering or relaying the wireless signals.

Alternatively, it is also possible that the aerial vehicle is navigated to a predetermined position or a predetermined area by remotely controlling the navigation of the aerial vehicle 100. After a user has manually navigated the aerial vehicle to a desired position, the aerial vehicle 100 further autonomously navigates in order to optimize the position with respect to a wireless communication link as described above.

In the following, some exemplary operations are described which may be carried out by components which are carried by the aerial vehicle 100.

For example, aerial vehicle 100 may carry an analysing device 30. Analysing device 30 may receive signals of the wireless communication link 110 and perform an analysis of the received wireless signals. For this purpose, analysing device 30 may comprise a separate antenna 31 for receiving wireless signals of the wireless communication link 110. Alternatively, analysing device 30 and power measurement device 10 may use a same antenna, for example, antenna 11. Analysing device 30 may receive signals of the wireless communication link 110 and record the received signals in a memory 32. Accordingly, the recorded data relating to the received signals may be used for a subsequent analysis. For example, the recorded signals may be read out from memory 32 and analysed by a further device after the aerial vehicle 100 has landed. Additionally or alternatively, it is also possible to transmit the result of analysing device 30 to a remote device. For this purpose, the data may be transmitted to the remote device by means of a transmitter 33.

Analysing device 30 may also perform any kind of appropriate analysis based on the received signals of the wireless communication link 110. For example, analysing device 30 may demodulate the received signal, determine a quality parameter of the wireless signal or perform any other kind of appropriate analysis. For example, analysing device 30 may determine a quality parameter such as a data throughput, a data bandwidth, an error rate, signal strength etc. In particular, the related quality parameters may be monitored over time. As mentioned above, the determined quality parameters may be stored in a memory 32 of analysing device 30. Additionally or alternatively, the determined quality parameters may be forwarded to a remote device by means of transmitter 33.

Furthermore, analysing device 30 may listen to the received signals of the wireless communication link. In this case, analysing device 30 may, for example, listen to the received signals in order to identify a predetermined pattern or sequence in the received signal. After receiving such a predetermined pattern or sequence, analysing device 30 may start recording of the received signals. However, it is understood, that any other kind of analysis for the received signals related to the wireless transmission link may be possible, too.

Aerial vehicle 100 may also serve as a platform for carrying a disturbing device 40. For example, disturbing device 40 is used for disturbing/interfering the wireless communication link 110. For this purpose, disturbing device 40 may emit a predetermined signal, e.g., a predetermined false signal. This predetermined signal may be, for example a signal similar to the original signal on the wireless communication link 110, but with different, for example modified, data content. Alternatively, it may be also possible to emit a disturbing signal comprising noise or any other kind of signal for interfering the wireless communication link. Especially, disturbing device 40 may emit an unspecific jamming signal. Alternatively, disturbing device 40 may generate a specific interfering signal which is specifically adapted to the signal and/or data content of the related wireless communication link 110. For example, disturbing device 40 may receive signals of the wireless communication link 110, analyse the received signal, modify the content in the received signal and emit a wireless signal with the modified content. However, disturbing device 40 may also apply any other approach for disturbing/interfering the signal of the wireless communication link 110.

Aerial vehicle 100 may also carry a relay device 50. Relay device 50 may receive, for example, a wireless signal from a first communication partner 101, 102 and forward the received signal to a further communication partner 101, 102. In this connection, relay device 50 may amplify the received signal and emit the amplified received signal. However, it is also possible that relay device 50 may apply any kind of appropriate modification. For example, relay device 50 may emit the signal on a different frequency band or channel, modify the transmission protocol, apply different encoding of the content of the transmitted data etc. For example, relay device 50 may receive data from a first communication partner, decode the received data and apply a different encoding, e.g., by using a different encryption key. However, any other modification of the received signal may be possible before forwarding the signal to the further communication partner 101, 102.

In order to identify an appropriate, in particular optimized position in the three-dimensional space or on a two-dimensional plane, controller 20 of aerial vehicle 100 may take into account appropriate parameters such as a power level value of all related communication partners. For example, controller 20 may determine the related parameters such as the power level values for each communication partner 101, 102, separately. For example, controller 20 may determine an appropriate position where the power level of the signal emitted by the individual communication partners 101, 102 are all the same. Accordingly, controller 20 may navigate the aerial vehicle 100 to a position between the communication partners which might be almost in the middle between the communication partners. Furthermore, controller 20 may also take into account further information, for example different properties of the individual communication partners. Accordingly, the power level values of the individual communication partners may be individually weighted by individual weighting factors. However, any other approach for determining an appropriate position between the individual communication partners 101, 102 may be possible, too.

For example, it may be also possible to further consider topographical constraints. For this purpose, controller 20 may comprise a memory for storing a topographical map or a map for providing further constraints such as a minimum and/or maximum flying height or the like. Furthermore, it may be also possible to specify restricted areas or any other conditions. In this case, controller 20 may further take into account these constraints when navigating the aerial vehicle 100.

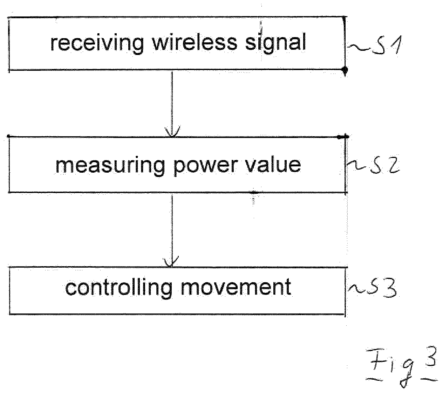

Figure 3 shows a method for controlling an aerial vehicle 100 according to an embodiment. In general, the method for controlling the aerial vehicle 100 may comprise any step for carrying out a feature as already described in connection with the aerial vehicle 100. Furthermore, aerial vehicle 100 may comprise any component in order to perform an operation as described below in connection with the method for controlling the aerial vehicle 100.

In step S1, a wireless signal is received by the aerial vehicle 100, in particular by a power measurement device 10 of the aerial vehicle 100.

In step S2, a power value of the received wireless signal is measured.

In step S3, a movement of the aerial vehicle 100 is controlled based on the measured power value of the received wireless signal. In this way, the aerial vehicle 100 is moved to an appropriate position for analysing the wireless signal, interfering the wireless signal and/or relaying the wireless signal.

The method may further comprise a step for performing a signal analysis of the received wireless signal.

Additionally or alternatively, the method may comprise a step for disturbing the wireless signal.

Summarizing, the present invention relates to an aerial vehicle which serves as flying platform for measuring and/or interfering wireless signals. The aerial vehicle measures a power level of a wireless signal related to a wireless communication link and autonomously navigates the aerial vehicle to an appropriate position based on the measurement result of the wireless signal.

### LIST OF REFERENCE SIGNS

- 10: power measurement device
- 11: antenna

- 20: controller

- 30: signal analyzing device
- 31: antenna
- 32: recording unit
- 33: transmitter

- 40: disturbing device

- 50: relay device

- 100: aerial vehicle
- 101, 102: communication partner
- 110: wireless link

## Claims

1. Aerial vehicle (100) for reacting on wireless signals, the aerial vehicle (100) comprising:
a power measurement device (10), configured receive a wireless signal and measure a power value of the received wireless signal; and
a controller (20), communicatively coupled with the power measurement device (10) and configured to control a movement of the aerial vehicle (100) based on the measured power value of the received wireless signal.

2. Aerial vehicle (100) according to claim 1, wherein the aerial vehicle (100) is an unmanned aerial vehicle.

3. Aerial vehicle (100) according to claim 1 or 2, wherein the aerial vehicle (100) comprises a highly movable flying platform.

4. Aerial vehicle (100) according to any of claims 1 to 3, wherein the power measurement device (10) is configured to receive a signal of a wireless point to point communication link.

5. Aerial vehicle (100) according to any of claims 1 to 4, wherein the power measurement device (10) is configured to receive a signal of a directional wireless link.

6. Aerial vehicle (100) according to any of claims 1 to 5, wherein the power measurement device (10) is configured to receive wireless signals from multiple communication partners (101, 102) of a wireless communication link (110), and individually measure a power value for each received wireless signal, and
wherein the controller (20) is configured to control the movement of the aerial vehicle (100) based on a combination of the measured power values of the received wireless signals.

7. Aerial vehicle (100) according to any of claims 1 to 6, comprising a signal analysing device (30) configured to perform a signal analysis of a predetermined wireless signal.

8. Aerial vehicle (100) according to claim 7, wherein the signal analysis comprises at least one of demodulating the wireless signal, determining a quality parameter of the wireless signal, intercepting the wireless signal, and monitoring the wireless signal.

9. Aerial vehicle (100) according to claim 7 or 8, wherein the signal analysing device (30) comprises a recording unit (32) configured to record the results of the signal analysis.

10. Aerial vehicle (100) according to any of claims 7 to 9, wherein the signal analysing device (30) comprises a transmitter (33) configured to transmit the results of the signal analysis to a remote device.

11. Aerial vehicle (100) according to any of claims 1 to 9, comprising a disturbing device (40) configured to disturb a predetermined wireless signal.

12. Aerial vehicle (100) according to claim 11, wherein the disturbing of the wireless signal comprises at least one of emitting a predetermined false signal, emitting an unspecific jamming signal, and generating and emitting a specific interfering signal with respect to the wireless signal.

13. Method for controlling an aerial vehicle (100), comprising:
receiving (S1) a wireless signal by a power measurement device of the aerial vehicle (100);
measuring (S2) a power value of the received wireless signal; and
controlling (S3) a movement of the aerial vehicle (100) based on the measured power value of the received wireless signal.

14. Method according to claim 13, comprising a step of performing a signal analysis of the received wireless signal.

15. Method according to claim 13 or 14, comprising a step of disturbing the wireless signal.
